# FASCICULE DE BREVET EUROPEEN

(11) **EP 0 789 440 B1**
(45) Date de publication et mention de la délivrance du brevet: **16.08.2000**
(21) Numéro de dépôt: 97400262.8
(22) Date de dépôt: 06.02.1997
(51) Int. Cl.: H02K 15/02, B23K 20/02

(54) **Procédé de fabrication d'un rotor magnétoélectrique à griffes, rotor fabriqué par un tel procédé**
Verfahren zur Herstellung eines magnetoelektrischen Läufers mit Klauenpolen und nach diesem Verfahren hergestellter Läufer
Method for producing a magnetoelectric rotor with claw-type poles and rotor produced by this method

(30) Priorité: 08.02.1996 FR 9601550
(43) Date de publication de la demande: 13.08.1997
(73) Titulaire: GEC ALSTHOM MOTEURS SA, 54062 Nancy Cédex (FR)
(72) Inventeur: Gueraud, Alain, 54280 Seichamps (FR); Mercier, Jean-Charles, 54710 Ludres (FR)
(74) Mandataire: Gosse, Michel

(56) Documents cités:
- US-A- 4 934 579
- PATENT ABSTRACTS OF JAPAN vol. 012, no. 232 (E-628), 30 Juin 1988 & JP 63 023531 A (TOSHIBA CORP), 30 Janvier 1988,
- PATENT ABSTRACTS OF JAPAN vol. 096, no. 006, 28 Juin 1996 & JP 08 047193 A (MITSUBISHI ELECTRIC CORP), 16 Février 1996,

## Description

L'invention concerne un procédé de fabrication d'un rotor magnétoélectrique à griffes, et un rotor fabriqué par un tel procédé. Plus particulièrement l'invention concerne un procédé de fabrication d'un rotor magnétoélectrique destiné à être utilisé dans une machine synchrone rapide, et un rotor magnétoélectrique à griffes fabriqué par ce procédé.

Ces rotors à griffes sont constitués d'une pluralité d'éléments amagnétiques et magnétiques solidarisés. Les vitesses qui peuvent être mises en jeu dans certaines machines synchrones rapides peuvent être égales ou supérieures à 50 000 t/mn. Or, comme indiqué ci-dessus, ces rotors sont des assemblages de pièces, de ce fait les constructeurs de rotor à griffes cherchent à obtenir des rotors ayant une résistance à l'éclatement centrifuge la plus élevée possible, tout en conservant un profil aérodynamique optimal.

Pour réaliser des rotors pleins pouvant fonctionner aux vitesses mentionnées plus haut, il est nécessaire d'utiliser des techniques d'assemblage du type compression isostatique ou équivalent pour que le rotor puisse résister à l'éclatement. En effet, en rotation, la force centrifuge qui se développe est proportionnelle à la masse en mouvement.

Des procédés connus de fabrication d'un rotor magnétoélectrique à griffe du type comprenant des parties magnétiques, formant les griffes polarisées du rotor, et des parties amagnétiques, de séparation des griffes de polarité opposée, confinés dans un cylindre carter creux amagnétique, comprennent une étape de remplissage du cylindre creux amagnétique avec les parties magnétiques et amagnétiques, et une étape de compression isostatique de l'ensemble des parties magnétiques, des parties amagnétiques et du cylindre carter creux.

L'utilisation d'étapes de compression isostatique imposent que les pièces constitutives du rotor soient parfaitement assemblées. En effet, s'il subsistait des espaces sans matière lors de la compression isostatique, ceux-ci en se comprimant généreraient des déplacements des pièces constitutives néfastes au dimensionnement magnétique et à l'équilibre mécanique statique et dynamique du rotor ainsi réalisé.

Le moindre des problèmes résultants serait que le rotor n'ait pas les caractéristiques magnétiques optimales espérées, le pire des problèmes serait que le déséquilibre mécanique introduit rende le rotor inutilisable.

En outre il est nécessaire que les griffes présentent des formes adaptées pour un meilleur rendement de la machine.

Par exemple, la face longitudinale des griffes magnétiques en regard du stator doit avantageusement présenter un entrefer magnétique progressif permettant d'optimiser le passage de flux magnétique entre les griffes et le stator de la machine tournante.

Selon un autre exemple, il est nécessaire de disposer un matériau amagnétique entre deux masses magnétiques adjacentes de polarités opposées (griffes adjacentes). Ce matériau amagnétique permet de limiter les fuites de flux magnétique passant directement entre deux griffes adjacentes de polarités opposées, au lieu de transiter par le stator.

Les pièces magnétiques ou amagnétiques résultantes sont de forme complexe, et leur façonnage est long et onéreux surtout pour obtenir les tolérances imposées par le traitement par compression isostatique.

L'un des buts de la présente invention est de proposer un procédé de fabrication de rotor magnétoélectrique du type décrit ci-dessus, dans lequel le façonnage des pièces complexes magnétiques ou amagnétiques serait simplifié.

A cet effet l'invention concerne un procédé de fabrication d'un rotor magnétoélectrique à griffe du type comprenant des pièces en matériau magnétique, comprenant les pôles du rotor, et des pièces en matériau amagnétique, de séparation des pôles de polarité opposée, confinés dans un cylindre carter creux de révolution en matériau amagnétique, le procédé comprenant une étape de remplissage du cylindre creux avec les pièces en matériau magnétique et amagnétique, et une étape de compression isostatique de l'ensemble desdites pièces et du cylindre carter creux. Selon l'invention chaque pièce en matériau magnétique ou amagnétique est réalisée à partir d'une pluralité d'éléments de tube gigognes indépendants ajustés et coaxiaux, chaque élément de tube ayant des bords latéraux, des extrémités transversales et une face latérale présentant la forme extérieure de l'épaisseur radiale correspondante de la pièce en matériau magnétique ou amagnétique concernée.

Dans un mode de réalisation, le cylindre carter creux en matériau amagnétique est pourvu de fenêtres traversantes, chaque fenêtre traversante étant destinée à réceptionner un élément de tube distal d'une pièce en matériau magnétique.

Avantageusement, les fenêtres traversantes ont, en coupe transversale, une forme générale convergente de l'intérieur du cylindre carter, lesdits éléments de tube distaux ayant un rayon et une épaisseur radiale sensiblement égaux au rayon et à l'épaisseur radiale du cylindre carter, et présentant des bords latéraux complémentaires de la forme convergente des fenêtres, les dits éléments de tube distaux étant les premiers des éléments de tube positionnés dans ledit cylindre carter lors de l'étape de remplissage.

Selon le procédé de l'invention, à l'issue de l'étape de compression isostatique, le rotor résultant peut subir une étape de finition. Cette étape de finition peut par exemple consister à creuser axialement le rotor pour l'alléger ou donner une forme particulière à la face externe du rotor.

L'invention concerne aussi un rotor magnétoélectrique à griffe du type comprenant des pièces en matériau magnétique, comprenant les pôles du rotor, et des pièces en matériau amagnétique, de séparation des pôles de polarité opposée, confinés dans un cylindre carter creux de révolution en matériau amagnétique fabriqué selon le procédé décrit ci-dessus.

Dans un mode de réalisation, le rotor magnétoélectrique comprend deux pièces mono pôle en matériau magnétique, de polarité opposée, et une pièce en matériau amagnétique, chaque pièce mono pôle comprenant un moyeu de révolution ayant un rayon sensiblement égal au rayon intérieur du cylindre carter, et présentant une extrémité libre et un pôle en biseau, ledit pôle en biseau comprenant une face longitudinale de même rayon que le moyeu, une face transversale oblique formant le biseau avec la dite face longitudinale, et deux faces latérales planes symétriques par rapport au plan de symétrie du pôle en biseau, convergent l'une vers l'autre de la face longitudinale vers la face oblique, lesdites faces latérales planes formant avec le moyeu des épaulements transversaux, les deux pièces en matériau magnétique étant disposées sur le même axe, faces obliques en regard, la pièce amagnétique étant disposée entre les faces obliques en regard, et ayant une forme complémentaire des deux pièces en matériau magnétique de sorte que l'ensemble pièces en matériaux magnétique ou amagnétique constitue un cylindre de révolution plein de rayon sensiblement égal au rayon intérieur du cylindre carter amagnétique de révolution, le cylindre carter ayant deux fenêtres traversantes, chacune en regard de la face longitudinale de l'une des pièces en matériau magnétique, chaque fenêtre étant occupée par un élément de tube distal en matériau magnétique de même polarité que la pièce en matériau magnétique à laquelle il est associé.

Dans un autre mode de réalisation le rotor magnétoélectrique comprend deux pièces d'extrémité mono pôle en matériau magnétique, au moins une pièce intermédiaire en matériau magnétique et des pièces en matériau amagnétique, chaque pièce mono pôle comprenant un moyeu de révolution ayant un rayon sensiblement égal au rayon intérieur du cylindre carter, et présentant une extrémité libre et un pôle en biseau, ledit pôle en biseau comprenant une face longitudinale de même rayon que le moyeu, une face transversale oblique formant le biseau avec la dite face longitudinale, et deux faces latérales planes symétriques par rapport au plan de symétrie du pôle en biseau, convergent l'une vers l'autre de la face longitudinale vers la face oblique, les dites faces latérales planes formant avec le moyeu des épaulements transversaux, la ou les pièce(s) intermédiaire (s) comprenant deux pôles de même polarité, ayant la même forme que les pôles des pièces d'extrémité, chacun ayant une face oblique en regard de la face oblique du pôle d'une des pièces magnétiques d'extrémité ou de l'un des pôles d'une autre pièce intermédiaire, chaque pôle étant séparé du pôle en regard par une pièce amagnétique de forme complémentaire des deux pôles de sorte que l'ensemble des pièces d'extrémité, de la ou des pièces intermédiaires, et des pièces en matériau amagnétique constitue un cylindre de révolution plein de rayon sensiblement égal au rayon intérieur du cylindre de révolution carter amagnétique, le cylindre carter ayant autant de fenêtres traversantes que de pôles, chacune en regard de la face longitudinale de l'un des pôles en matériau magnétique, chaque fenêtre étant occupée par un élément de tube distal en matériau magnétique de même polarité que le pôle auquel il est associé.

Les épaulements transversaux forment avantageusement un angle non nul avec le plan perpendiculaire à l'axe du rotor.

Dans le mode de réalisation minimal, les pièces en matériau magnétique ou amagnétique comprennent un élément de tube plein central tangent aux faces latérales planes symétriques, et un élément de tube creux de rayon intérieur sensiblement égal au rayon de l'élément de tube plein et de rayon extérieur sensiblement égal au rayon intérieur du cylindre carter.

L'un des avantages de la présente invention est la possibilité de s'affranchir de la forme complexe des pièces constitutives du rotor en fabriquant une pluralité d'éléments de tube facilement usinables et de réunir ces éléments de tube pour fabriquer la pièce complexe.

Un autre avantage de la présente invention résulte du principe gigogne des tubes qui assure une meilleure tenue à l'éclatement centrifuge du rotor.

Les avantages et caractéristiques de la présente invention résulteront de la description qui va suivre en référence aux dessins annexés dans lesquels :

La figure 1A est une vue schématique d'une pièce magnétique d'extrémité d'un rotor selon l'invention.

Les figures 1B, 1C sont des vues schématiques respectivement du dessus et transversale de la vue de la figure 1A.

La figure 2A est une vue schématique d'une pièce magnétique intermédiaire d'un rotor selon l'invention.

Les figures 2B, 2C sont des vues schématiques respectivement du dessus et transversale de la vue de la figure 2A.

La figure 3A est une vue schématique d'une pièce amagnétique d'un rotor selon l'invention.

Les figures 3B, 3C sont des vues schématiques respectivement du dessus et transversale de la vue de la figure 3A.

La figure 4 est une vue schématique éclatée d'un rotor selon l'invention.

La figure 5A est une vue schématique d'un rotor assemblé selon l'invention.

Les figures 5B, 5C, 5D sont des vues schématiques respectivement des coupes B, C, D de la vue de la figure 5A.

La figure 6 est une vue schématique d'un rotor selon l'invention après l'étape finale d'usinage.

Dans la description qui va suivre les termes "longitudinal" et "latéral" concernent des éléments de surfaces qui n'ont pas d'intersection avec l'axe de la pièce considérée ou du rotor.

l'invention concerne un procédé de fabrication d'un rotor magnétoélectrique à griffes du type comprenant des pièces en matériau magnétique 1, 9, formant les pôles 3 du rotor, et des pièces en matériau amagnétique 12, de séparation des pôles 3 de polarité opposée, confinés dans un cylindre carter creux 13 de révolution en matériau amagnétique. Classiquement le procédé comprenant une étape de remplissage du cylindre creux 13 avec les pièces en matériau magnétique 1, 9 et amagnétique 12, et une étape de compression isostatique de l'ensemble desdites pièces 1, 9, 12 et du cylindre carter creux 13.

Les pièces de ce type de rotor plein étant de forme complexe, une des étapes caractéristiques du procédé selon l'invention consiste en ce que chaque pièce en matériau magnétique 1, 9 ou amagnétique 12 est réalisée à partir d'éléments de tube gigognes 10, 11, 14 , 100, 110, 140, 101, 111 indépendants ajustés et coaxiaux, chaque élément de tube 10, 11, 14, 100, 110, 140, 101, 111 ayant des bords latéraux, des extrémités transversales et une face latérale présentant la forme extérieure de l'épaisseur radiale correspondante de la pièce en matériau magnétique 1, 9 ou amagnétique 12 concernée.

Dans une mise en oeuvre du procédé selon l'invention le cylindre carter creux 13 en matériau amagnétique est pourvu de fenêtres traversantes 15, chaque fenêtre traversante étant destinée à réceptionner un élément de tube distal magnétique 14, 140 d'une pièce 1, 9 en matériau magnétique.

Avantageusement les fenêtres traversantes 15 ont, en coupe transversale, une forme générale convergente de l'intérieur vers l'extérieur du cylindre carter 13, et les éléments de tube distaux 14, 140 ayant un rayon et une épaisseur radiale sensiblement égaux au rayon et à l'épaisseur radiale du cylindre carter 13, présentent des bords latéraux 16 complémentaires de la forme convergente des fenêtres 15, les éléments de tube distaux 14, 140 étant les premiers des éléments de tube 10, 11, 14, 100, 110, 140, 101, 111 positionnés dans ledit cylindre carter 13 lors de l'étape de remplissage.

Ces éléments de tube distaux 14, 140, de par la forme de leurs bords latéraux 16, permettent de constituer un entrefer progressif pour chaque pôle 3, 30 du rotor.

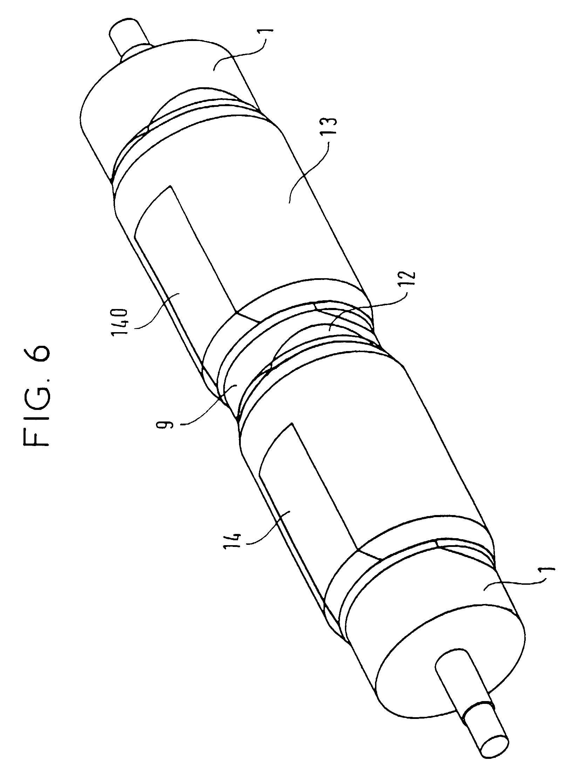

Selon le procédé de l'invention, à l'issue de l'étape de compression isostatique, le rotor résultant peut subir une étape de finition. Cette étape de finition peut par exemple consister à creuser axialement le rotor pour l'alléger ou donner une forme particulière à la face externe du rotor (Fig. 6).

L'invention concerne aussi un rotor magnétoélectrique à griffes du type comprenant des pièces en matériau magnétique 1, 9 formant les pôles 3 du rotor, et des pièces en matériau amagnétique 12 de séparation des pôles 3 de polarité opposée, confinés dans un cylindre carter creux 13 de révolution en matériau amagnétique fabriqué selon le procédé décrit ci-dessus.

Dans un premier mode de réalisation, le rotor est un rotor bipolaire comprenant deux pièces 1 d'extrémité mono pôle en matériau magnétique, de polarité opposée, et une pièce en matériau amagnétique 12.

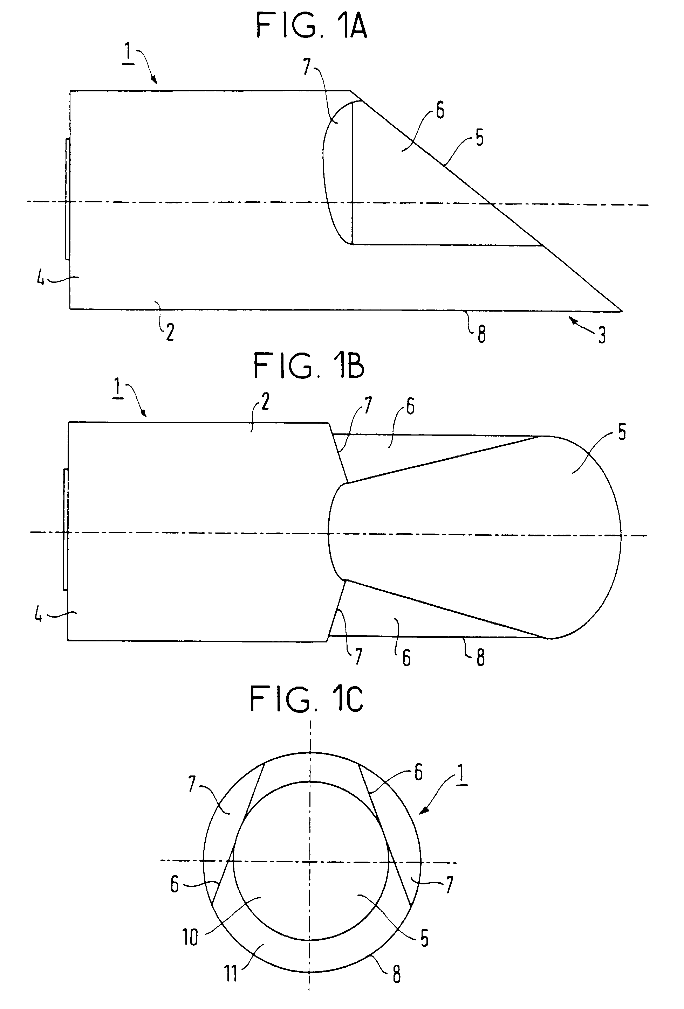

Chaque pièce 1 mono pôle (Figs. 1A, 1B, 1C) comprend un moyeu de révolution 2 ayant un rayon sensiblement égal au rayon intérieur du cylindre carter 13, et présentant une extrémité libre 4 et un pôle 3 en biseau. Le pôle 3 en biseau comprenant une face longitudinale 8 de même rayon que le moyeu 2, une face transversale oblique 5 formant le biseau avec la face longitudinale 8, et deux faces latérales 6 planes, symétriques par rapport au plan de symétrie du pôle 3 en biseau, convergeant l'une vers l'autre, de la face longitudinale 8 vers la face oblique 5.

Les faces latérales planes 6 forment avec le moyeu des épaulements 7 transversaux.

Les deux pièces 1 en matériau magnétique sont disposées sur le même axe, leur face oblique 5 en regard.

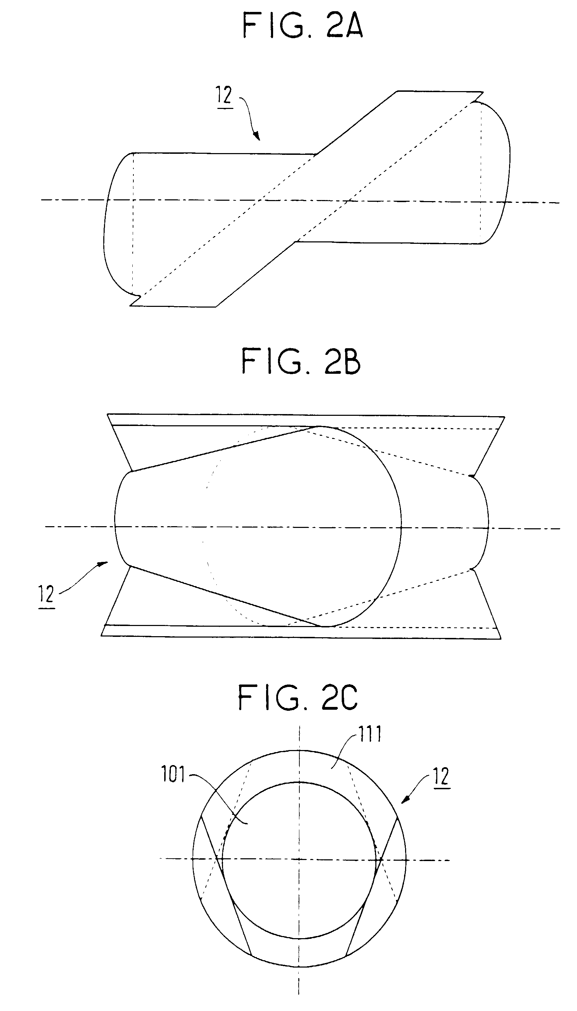

La pièce amagnétique 12 (Figs. 2A, 2B, 2C) est disposée entre les faces obliques 5 en regard, et a une forme complémentaire des deux pièces 1 en matériau magnétique de sorte que l'ensemble des pièces en matériaux magnétique 1 ou amagnétique 12 constitue un cylindre de révolution plein de rayon sensiblement égal au rayon intérieur du cylindre de révolution carter 13 amagnétique.

Le cylindre carter 13 a deux fenêtres traversantes 15, chacune en regard de la face longitudinale 8 de l'une des pièces 1 en matériau magnétique, chaque fenêtre 15 étant occupée par un élément de tube distal 14 en matériau magnétique de même polarité que la pièce 1 en matériau magnétique à laquelle il est associé.

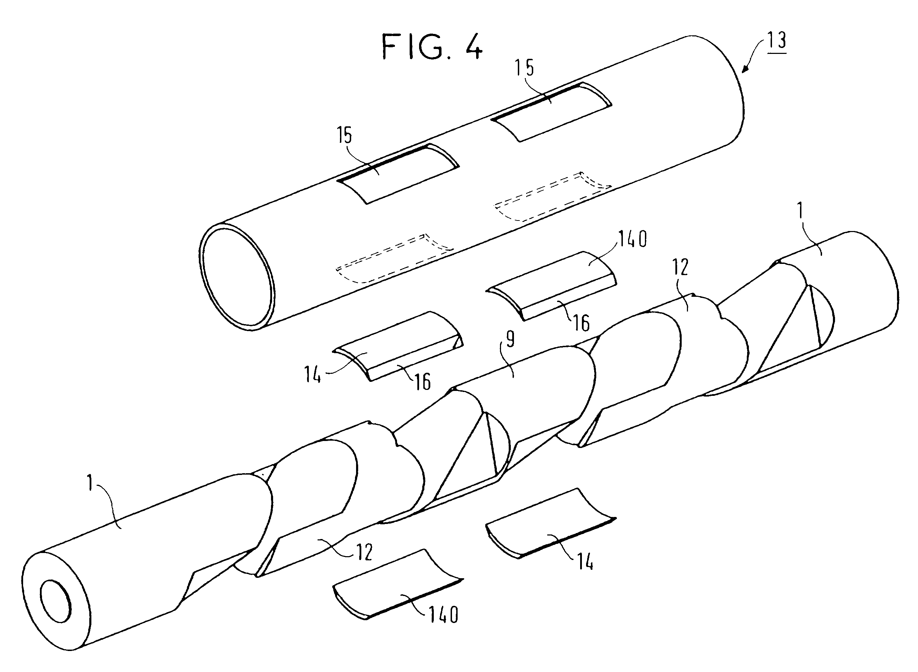

Dans un deuxième mode de réalisation (représenté sur les figures 4 à 6), le rotor comprend une succession axiale de rotors bipolaires.

Il comprend deux pièces d'extrémité 1 mono pôle en matériau magnétique, au moins une pièce intermédiaire 9 en matériau magnétique et des pièces 12 en matériau amagnétique. Les pièces d'extrémité 1 mono pôle sont toujours de polarités opposées.

Les pièces d'extrémité 1 sont de la même forme que celle décrite dans le premier mode de réalisation (Figs. 1A, 1B, 1C).

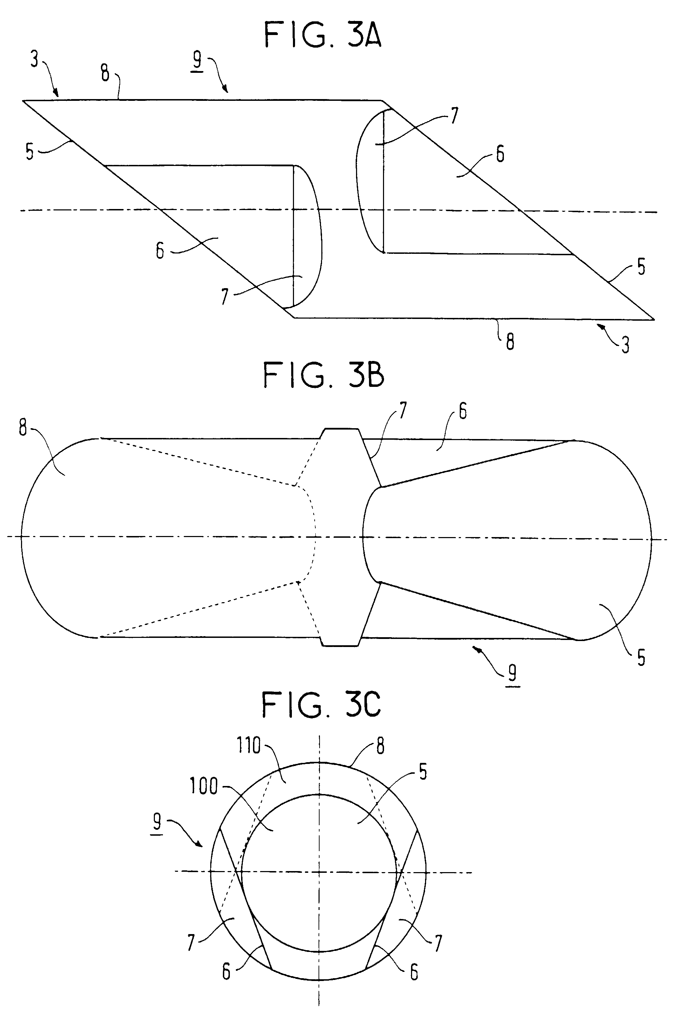

La (ou les) pièce(s) intermédiaire(s) 9 (Figs. 3A, 3B, 3C) comprend deux pôles 30 de polarités opposées, ayant la même forme que les pôles 3 des pièces d'extrémité 1.

Chaque pôle 30 d'une pièce intermédiaire 9 a une face oblique 50 en regard de la face oblique 5 du pôle 3 d'une des pièces magnétiques d'extrémité 1 ou de la face oblique 50 l'un des pôles 30 d'une autre pièce intermédiaire 9.

Chaque pôle 3, 30 est séparé du pôle 30, 3 en regard par une pièce amagnétique 12 (Figs. 2A, 2B, 2C) de forme complémentaire des deux pôles 3, 30 de sorte que l'ensemble des pièces d'extrémité 1, de la (ou des) pièce(s) intermédiaire(s) 9, et des pièces en matériau amagnétique 12 constitue un cylindre de révolution plein de rayon sensiblement égal au rayon intérieur du cylindre de révolution carter 13 amagnétique

Comme dans le premier mode de réalisation, le cylindre carter 13 a autant de fenêtres traversantes 15 que de pôles 3.

Chaque fenêtre 15 est en regard de la face longitudinale 8 de l'un des pôles 3 en matériau magnétique, chaque fenêtre est occupée par un élément de tube distal 14, 140 en matériau magnétique de même polarité que le pôle 3 auquel il est associé (Figs. 4).

Avantageusement, les épaulements transversaux 7 forment un angle avec le plan perpendiculaire à l'axe du rotor. Préférentiellement l'angle est de 45°.

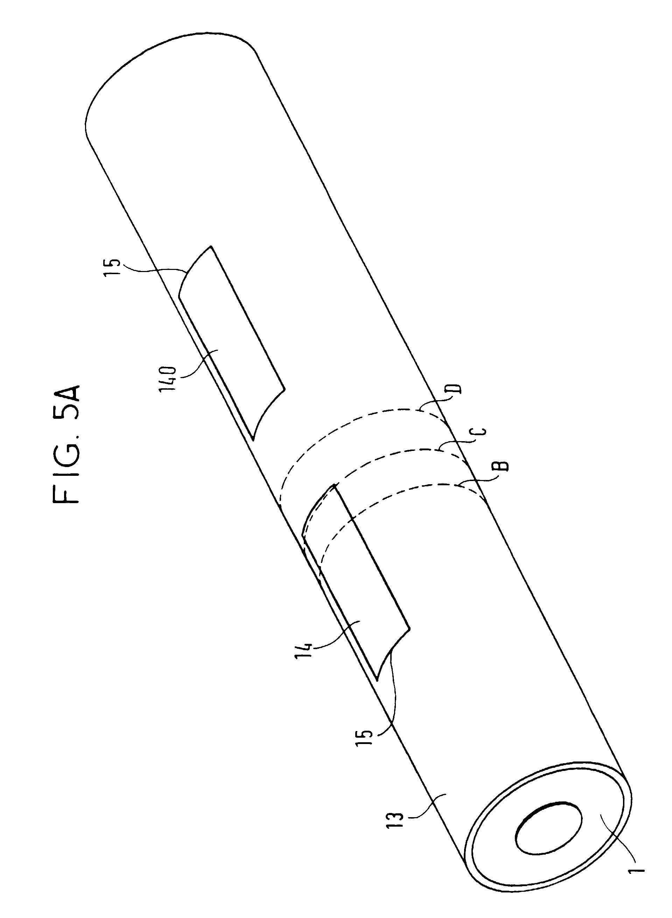

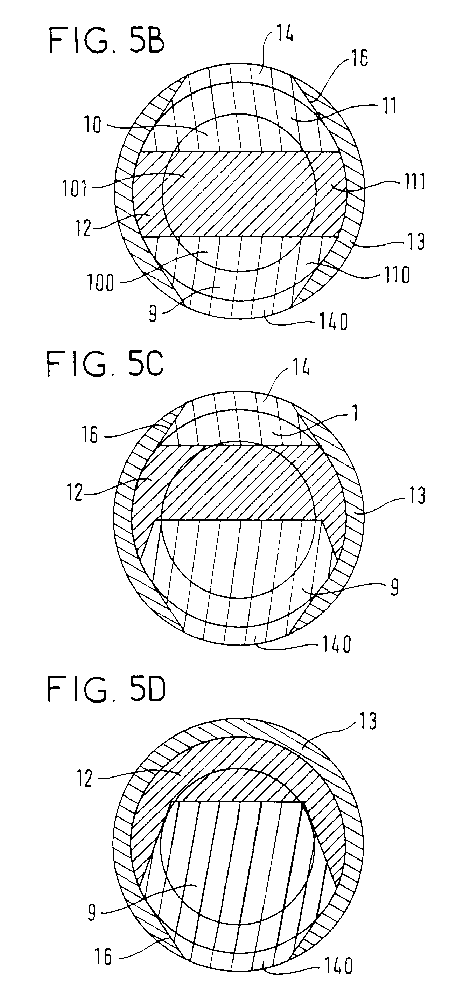

Dans le mode de réalisation représenté, les pièces en matériau magnétique 1, 9 ou amagnétique 12 comprennent un élément de tube plein central 10, 100, 101 tangent aux faces latérales planes symétriques 6, et un élément de tube creux 11, 110, 111 de rayon intérieur sensiblement égal au rayon de l'élément de tube plein 10 et de rayon extérieur sensiblement égal au rayon intérieur du cylindre carter 13. En outre comme mentionné précédemment, les pièces en matériau magnétique comprennent un élément de tube distal 14, 140 par pôle 3, 30 ayant un diamètre intérieur, et un diamètre extérieur sensiblement égaux a ceux du cylindre carter 13. Sur les Figures 5B, 5C, 5D, chaque pièce est hachurée de façon différente indépendamment des éléments de tube qui la constituent.

On pourra, sans sortir du cadre de l'invention, réaliser des pièces plus complexes multi-pôles de manière à obtenir un, ou une succession axiale de, rotor(s) à 2N pôles avec N supérieur à 1. Selon un autre exemple, on pourra faire varier le nombre d'éléments de tube constitutifs de chaque pièce sans sortir du cadre de la présente invention.

## Revendications

1. Procédé de fabrication d'un rotor magnétoélectrique à griffes du type comprenant des pièces en matériau magnétique (1, 9), formant les pôles (3) du rotor, et des pièces en matériau amagnétique (12), de séparation des pôles (3) de polarité opposée, confinés dans un cylindre carter creux de révolution (13) en matériau amagnétique, le procédé comprenant une étape de remplissage du cylindre creux (13) avec les pièces en matériau magnétique (1, 9) et amagnétique (12), et une étape de compression isostatique de l'ensemble desdites pièces (1, 9, 12) et du cylindre carter creux (13), caractérisé en ce que chaque pièce en matériau magnétique (1, 9) ou amagnétique (12) est réalisée à partir d'une pluralité d'éléments de tube gigognes (14, 10, 11, 110, 100, 140, 111, 101) indépendants ajustés et coaxiaux, chaque élément de tube (14, 10, 11, 110, 100, 140, 111, 101) ayant des bords latéraux, des extrémités transversales et une face latérale présentant la forme extérieure de l'épaisseur radiale correspondante de la pièce en matériau magnétique (1, 9) ou amagnétique (12) concernée.

2. Procédé de fabrication selon la revendication 1 caractérisé en ce que le cylindre carter creux (13) en matériau amagnétique est pourvu de fenêtres traversantes (15), chaque fenêtre traversante (15) étant destinée à réceptionner un élément de tube distal (14, 140) d'une pièce (1, 9) en matériau magnétique.

3. Procédé de fabrication selon la revendication 2 caractérisé en ce que les fenêtres traversantes (15) ont, en coupe transversale, une forme générale convergente de l'intérieur vers l'extérieur du cylindre carter (13), lesdits éléments de tube distaux (14, 140) ayant un rayon et une épaisseur radiale sensiblement égaux au rayon et à l'épaisseur radiale du cylindre carter (13), et présentant des bords latéraux (16) complémentaires de la forme convergente des fenêtres (15), les dits éléments de tube distaux (14, 140) étant les premiers des éléments de tube (14, 10, 11, 110, 100, 140, 111, 101) positionnés dans ledit cylindre carter (13) lors de l'étape de remplissage.

4. Procédé de fabrication selon l'une quelconque des revendications 1 à 3 caractérisé en ce qu'il comprend une étape de finition consistant à creuser axialement le rotor ou donner une forme particulière à la face externe du rotor.

5. Rotor magnétoélectrique à griffes du type comprenant des pièces en matériau magnétique (1, 9), formant les pôles (3) du rotor, et des pièces en matériau amagnétique (12), de séparation des pôles (3, 30) de polarité opposée, confinés dans un cylindre carter creux de révolution (13) en matériau amagnétique caractérisé en ce qu'il est fabriqué selon le procédé de l'une quelconque des revendications 1 à 3.

6. Rotor magnétoélectrique selon la revendication 5 caractérisé en ce qu'il comprend deux pièces (1) mono pôle en matériau magnétique, de polarités opposées, et une pièce (12) en matériau amagnétique, chaque pièce (1) mono pôle comprenant un moyeu de révolution (2) ayant un rayon sensiblement égal au rayon intérieur du cylindre carter (13), et présentant une extrémité libre (4) et un pôle (3) en biseau, ledit pôle (3) en biseau comprenant une face longitudinale(8) de même rayon que le moyeu (2), une face transversale oblique (5) formant le biseau avec la dite face longitudinale (8), et deux faces latérales planes (6) symétriques par rapport au plan de symétrie du pôle (3) en biseau, convergent l'une vers l'autre de la face longitudinale (8) vers la face oblique (5), les dites faces latérales planes (6) formant avec le moyeu (2) des épaulements transversaux (7), les deux pièces (1) en matériau magnétique étant disposé sur le même axe, faces obliques (5) en regard, la pièce amagnétique (12) étant disposée entre les faces obliques (5) en regard, et ayant une forme complémentaire des deux pièces (1) en matériau magnétique de sorte que l'ensemble pièces en matériaux magnétique ou amagnétique constitue un cylindre de révolution plein de rayon sensiblement égal au rayon intérieur du cylindre carter de révolution (13) amagnétique, le cylindre carter ayant deux fenêtres traversantes (15), chacune en regard de la face longitudinale (8) de l'une des pièces (1) en matériau magnétique, chaque fenêtre étant occupée par un élément de tube distal (14) en matériau magnétique de même polarité que la pièce en matériau magnétique à laquelle il est associé.

7. Rotor magnétoélectrique selon la revendication 5 caractérisé en ce qu'il comprend deux pièces d'extrémité (1) mono pôle en matériau magnétique de polarités opposées, au moins une pièce intermédiaire (9) en matériau magnétique et des pièces en matériau amagnétique (12), chaque pièce (1) mono pôle comprenant un moyeu (2) de révolution ayant un rayon sensiblement égal au rayon intérieur du cylindre carter (13), et présentant une extrémité libre (4) et un pôle (3) en biseau, ledit pôle (3) en biseau comprenant une face longitudinale (8) de même rayon que le moyeu (2), une face transversale oblique (5) formant le biseau avec la dite face longitudinale (8) , et deux faces latérales planes (6) symétriques par rapport au plan de symétrie du pôle (3) en biseau, convergent l'une vers l'autre de la face longitudinale (8) vers la face oblique (5), les dites faces latérales planes (6) formant avec le moyeu (2) des épaulements transversaux (7), la ou les pièce(s) intermédiaire(s) (9) comprenant deux pôles (30) de polarités opposées, ayant la même forme que les pôles (3) des pièces d'extrémité (1), chacun ayant une face oblique (50) en regard de la face oblique (5) du pôle (3) d'une des pièces magnétiques d'extrémité ou de la face oblique (50) de l'un des pôles (30) d'une autre pièce (9) intermédiaire, chaque pôle (3, 30) étant séparé du pôle (30, 3) en regard par une pièce amagnétique (12) de forme complémentaire des deux pôles (3, 30) de sorte que l'ensemble des pièces d'extrémité (1), de la ou des pièces intermédiaires (9), et des pièces en matériau amagnétique (12) constitue un cylindre de révolution plein de rayon sensiblement égal au rayon intérieur du cylindre de révolution carter amagnétique (13), le cylindre carter (13) ayant autant de fenêtres traversantes (15) qu'il y a de pôles (3, 30), chaque fenêtre (15) étant en regard de la face longitudinale (8) de l'un des pôles (3, 30) en matériau magnétique, chaque fenêtre (15) étant occupée par un élément de tube distal (14, 140) en matériau magnétique de même polarité que le pôle (3, 30) auquel il est associé.

8. Rotor magnétoélectrique selon la revendication 6 ou 7 caractérisé en ce que les épaulements transversaux (7) forment un angle non nul avec le plan perpendiculaire à l'axe du rotor.

9. Rotor magnétoélectrique selon l'une quelconque des revendications 6 à 8 caractérisé en ce que les pièces en matériau magnétique (1, 9) ou amagnétique (12) comprennent un élément de tube plein central (10, 100, 101) tangent aux faces latérales planes (6) symétriques, et un élément de tube creux (11, 110, 111) de rayon intérieur sensiblement égal au rayon de l'élément de tube plein (10, 100, 101) et de rayon extérieur sensiblement égal au rayon intérieur du cylindre carter (13).

## Patentansprüche

1. Verfahren zur Herstellung eines magnetoelektrischen Läufers mit Klauenpolen des Typs, der Teile (1, 9) aus magnetischem Material, die die Pole (3) des Läufers bilden, und Teile (12) aus nichtmagnetischem Material zur Trennung der Pole (3) mit entgegengesetzter Polarität umfasst, die in einem hohlen Gehäuse-Rotationszylinder (13) aus nichtmagnetischem Material eingeschlossen sind, wobei das Verfahren einen Schritt des Füllens des hohlen Zylinders (13) mit den Teilen aus magnetischem (1, 9) und nichtmagnetischem (12) Material und einen Schritt des isostatischen Komprimierens der Einheit aus den Teilen (1, 9, 12) und dem hohlen Gehäusezylinder (13) umfasst, dadurch gekennzeichnet, dass jedes Teil aus magnetischem (1, 9) oder nichtmagnetischem (12) Material ausgehend von einer Vielzahl von angepassten und koaxialen, unabhängigen, einschiebbaren Röhrenelementen (14, 10, 11, 110, 100, 140, 111, 101) hergestellt ist, wobei jedes Röhrenelement (14, 10, 11, 110, 100, 140, 111, 101), das Seitenränder, quer verlaufende Enden und eine Seitenfläche aufweist, eine äußere Form mit einer radialen Dicke aufweist, die dem betreffenden Teil aus magnetischem (1, 9) oder nichtmagnetischem (12) Material entspricht.

2. Herstellungsverfahren nach Anspruch 1, dadurch gekennzeichnet, dass der hohle Gehäusezylinder (13) aus nichtmagnetischem Material mit hindurchgehenden Fenstern (15) versehen ist, wobei jedes hindurchgehende Fenster (15) dazu bestimmt ist, ein fernes Röhrenelement (14, 140) eines Teils (1, 9) aus magnetischem Material aufzunehmen.

3. Herstellungsverfahren nach Anspruch 2, dadurch gekennzeichnet, dass die hindurchgehenden Fenster (15) im Querschnitt eine allgemeine Form haben, die vom Inneren zum Äußeren des Gehäusezylinders (13) hin konvergent ist, wobei die fernen Röhrenelemente (14, 140) einen Radius und eine radiale Dicke im Wesentlichen gleich dem Radius und der radialen Dicke des Gehäusezylinders (13) haben und zur konvergenten Form der Fenster (15) komplementäre Seitenränder (16) aufweisen, wobei die fernen Röhrenelemente (14, 140) die ersten der Röhrenelemente (14, 10, 11, 110, 100, 140, 111, 101) sind, die beim Schritt des Füllens im Gehäusezylinder (13) angeordnet werden.

4. Herstellungsverfahren nach einem der Ansprüche 1 bis 3, dadurch gekennzeichnet, dass es einen Endschritt umfasst, der darin besteht, den Läufer axial auszuhöhlen oder der Außenfläche des Läufers eine besondere Form zu geben.

5. Magnetoelektrischer Läufer mit Klauenpolen des Typs, der Teile (1, 9) aus magnetischem Material, die die Pole (3) des Läufers bilden, und Teile (12) aus nichtmagnetischem Material zur Trennung der Pole (3, 30) mit entgegengesetzter Polarität umfasst, die in einem hohlen Gehäuse-Rotationszylinder (13) aus nichtmagnetischem Material eingeschlossen sind, dadurch gekennzeichnet, dass er nach dem Verfahren eines der Ansprüche 1 bis 3 hergestellt wird.

6. Magnetoelektrischer Läufer nach Anspruch 5, dadurch gekennzeichnet, dass er zwei Monopolteile (1) aus magnetischem Material mit entgegengesetzten Polaritäten und ein Teil (12) aus nichtmagnetischem Material umfasst, wobei jedes Monopolteil (1) eine Rotationsnabe (2) mit einem Radius im Wesentlichen gleich dem Innenradius des Gehäusezylinders (13) umfasst und ein freies Ende (4) und einen abgeschrägten Pol (3) aufweist, wobei der abgeschrägte Pol (3) eine Längsfläche (8) mit dem gleichen Radius wie die Nabe (2), eine schräge, quer verlaufende Fläche (5), die mit der Längsfläche (8) die Abschrägung bildet, und in bezug auf die Symmetrieebene des abgeschrägten Pols (3) symmetrische, ebene Seitenflächen (6) umfasst, die von der Längsfläche (8) zur schrägen Fläche (5) hin zueinander konvergent sind, wobei die ebenen Seitenflächen (6) mit der Nabe (2) quer verlaufende Schultern (7) bilden, wobei die beiden Teile (1) aus magnetischem Material auf der selben Achse angeordnet sind, wobei die schrägen Flächen (5) einander gegenüber stehen, wobei das nichtmagnetische Teil (12) zwischen den einander gegenüberstehenden schrägen Flächen (5) angeordnet ist und eine zu den beiden Teilen (1) aus magnetischem Material komplementäre Form aufweist, so dass die Einheit aus Teilen aus magnetischem oder nichtmagnetischem Material einen massiven Rotationszylinder mit einem Radius im Wesentlichen gleich dem Innenradius des nichtmagnetischen Gehäuse-Rotationszylinders (13) bildet, wobei der Gehäusezylinder zwei hindurchgehende Fenster (15) aufweist, die jeweils der Längsfläche (8) eines der Teile (1) aus magnetischem Material gegenüberstehen, wobei jedes Fenster von einem fernen Röhrenelement (14) aus magnetischem Material mit der gleichen Polarität wie das Teil aus magnetischem Material, zu dem es gehört, eingenommen wird.

7. Magnetoelektrischer Läufer nach Anspruch 5, dadurch gekennzeichnet, dass er zwei Monopolendteile (1) aus magnetischem Material mit entgegengesetzten Polaritäten, wenigstens ein Zwischenteil (9) aus magnetischem Material und Teile (12) aus nichtmagnetischem Material umfasst, wobei jedes Monopolteil (1) eine Rotationsnabe (2) mit einem Radius im Wesentlichen gleich dem Innenradius des Gehäusezylinders (13) umfasst und ein freies Ende (4) und einen abgeschrägten Pol (3) aufweist, wobei der abgeschrägte Pol (3) eine Längsfläche (8) mit dem gleichen Radius wie die Nabe (2), eine schräge, quer verlaufende Fläche (5), die mit der Längsfläche (8) die Abschrägung bildet, und zwei in bezug auf die Symmetrieebene des abgeschrägten Pols (3) symmetrische, ebene Seitenflächen (6) umfasst, die von der Längsfläche (8) zur schrägen Fläche (5) hin zueinander konvergent sind, wobei die ebenen Seitenfläche (6) mit der Nabe (2) quer verlaufende Schultern (7) bilden, wobei das oder die Zwischenteil(e) (9) zwei Pole (30) mit entgegengesetzten Polaritäten umfasst, die die gleiche Form wie die Pole (3) der Endteile (1) aufweisen, die jeweils eine schräge Fläche (50) gegenüber der schrägen Fläche (5) des Pols (3) eines der magnetischen Endteile oder der schrägen Fläche (50) eines der Pole (30) eines anderen Zwischenteils (9) aufweisen, wobei jeder Pol (3, 30) vom gegenüberstehenden Pol (30, 3) durch ein nichtmagnetisches Teil (12) mit zu den beiden Polen (3, 30) komplementärer Form getrennt wird, so dass die Einheit aus Endteilen (1), dem oder den Zwischenteilen (9) und den Teilen (12) aus nichtmagnetischem Material einen massiven Rotationszylinder mit einem Radius im Wesentlichen gleich dem Innenradius des nichtmagnetischen Gehäuse-Rotationszylinders (13) bildet, wobei der Gehäusezylinder (13) so viele hindurchgehende Fenster (15) aufweist, wie es Pole (3, 30) gibt, wobei jedes Fenster (15) der Längsfläche (8) eines der Pole (3, 30) aus magnetischem Material gegenübersteht, wobei jedes Fenster (15) von einem fernen Röhrenelement (14, 140) aus magnetischem Material mit der gleichen Polarität wie der Pol (3, 30), zu dem es gehört, eingenommen wird.

8. Magnetoelektrischer Läufer nach Anspruch 6 oder 7, dadurch gekennzeichnet, dass die quer verlaufenden Schultern (7) mit der zur Achse des Läufers senkrechten Ebene einen Winkel ungleich null bilden.

9. Magnetoelektrischer Läufer nach einem der Ansprüche 6 bis 8, dadurch gekennzeichnet, dass die Teile aus magnetischem (1, 9) oder nichtmagnetischem (12) Material ein zentrales, massives Röhrenelement (10, 100, 101), das die symmetrischen, ebenen Seitenflächen (6) berührt, und ein hohles Röhrenelement (11, 110, 111) mit einem Innenradius im Wesentlichen gleich dem Radius des massiven Röhrenelements (10, 100, 101) und einem Außenradius im Wesentlichen gleich dem Innenradius des Gehäusezylinders (13) umfassen.

## Claims

1. A method of manufacturing a claw-type magneto-electric rotor comprising magnetic material parts (1, 9) forming poles (3) of said rotor and amagnetic material parts (12) separating poles (3) of opposite polarity confined in a hollow cylindrical casing (13) in the shape of a body of revolution and made from an amagnetic material, said method including a step of filling said hollow cylinder (13) with said magnetic material (1, 9) and amagnetic material (12) parts and a step of isostatic compression of the combination of said parts (1, 9, 12) and said hollow cylindrical casing (13), characterized in that each magnetic (1, 9) or amagnetic (12) material part is made from a plurality of nested, independent, matching and coaxial tube elements (14, 10, 11, 110, 100, 140, 111, 101) each having lateral edges, transverse ends and a lateral face having the exterior shape of the corresponding radial thickness of the magnetic (1, 9) or amagnetic (12) material part concerned.

2. A method according to claim 1, characterized in that said amagnetic material hollow cylindrical casing (13) has windows (15) through it, each window (15) being adapted to receive one distal tube element (14, 140) of a magnetic material part (1, 9).

3. A method according to claim 2, characterized in that, when seen in axial cross section, said windows (15) converge from the interior towards the exterior of said cylindrical casing (13), said distal tube elements (14, 140) having a radius and a radial thickness substantially equal to the radius and the radial thickness of said cylindrical casing (13) and lateral edges (16) complementary to the convergent shape of said windows (15), said distal tube elements (14, 140) being the first of said tube elements (14, 10, 11, 110, 100, 140, 111, 101) to be positioned in said cylindrical casing (13) during said filling step.

4. A method according to any one of claims 1 to 3, characterized in that it comprises a finishing step of axially hollowing out said rotor or giving a particular shape to the external face of said rotor.

5. A claw-type magneto-electric rotor comprising magnetic material parts (1, 9) forming poles (3) of said rotor and amagnetic material parts (12) separating poles (3, 30) of opposite polarity confined in a hollow cylindrical casing (13) in the shape of a body of revolution and made from an amagnetic material, characterized in that it is manufactured by the method according to any one of claims 1 to 3.

6. A magneto-electric rotor according to claim 5, characterized in that it comprises two single-pole magnetic material parts (1) having opposite polarities and an amagnetic material part (12), each single-pole part (1) comprising a hub of revolution (2) having a radius substantially equal to the inside radius of said cylindrical casing (13), a free end (4) and a chamfered pole (3), said chamfered pole (3) having a longitudinal face (8) the same radius as said hub (2), an oblique transverse face (5) forming said bevel with said longitudinal face (8) and two plane lateral faces (6) that are symmetrical about the plane of symmetry of said beveled pole (3), converging towards each other in the direction from said longitudinal face (8) towards said oblique face (5), said plane lateral faces (6) forming transverse shoulders (7) with said hub (2), said two magnetic material parts (1) being disposed on a common axis with their oblique faces (5) facing towards each other, said amagnetic part (12) being disposed between said oblique faces (5) facing each other and having a shape complementary to said two magnetic material parts (1) so that the set of magnetic or amagnetic material parts constitutes a solid cylinder of revolution having a radius substantially equal to the inside radius of said amagnetic cylinder of revolution casing (13), said cylindrical casing having two windows (15) through it, each facing said longitudinal face (8) of one of said magnetic material parts (1), each window being occupied by a magnetic material distal tube element (14) the same polarity as the associated magnetic material part.

7. A magneto-electric rotor according to claim 5, characterized in that it comprises two magnetic material single-pole end parts (1) of opposite polarity, at least one magnetic material intermediate part (9) and amagnetic material parts (12), each single-pole part (1) having a hub (2) of revolution having a radius substantially equal to the inside radius of said cylindrical casing (13), a free end (4) and a beveled pole (3), said beveled pole (3) comprising a longitudinal face (8) the same radius as said hub (2), an oblique transverse face (5) forming said bevel with said longitudinal face (8), and two plane lateral faces (6) symmetrical about the plane of symmetry of said beveled pole (3), converging in the direction from said longitudinal face (8) towards said oblique face (5), said plane lateral faces (6) forming with said hub (2) transverse shoulders (7), said intermediate part(s) (9) comprising two poles (30) of opposite polarity the same shape as said poles (3) of said end parts (1), each having an oblique face (50) facing said oblique face (5) of said pole (3) of one of said magnetic end parts or said oblique face (50) of one pole (30) of another intermediate part (9), each pole (3, 30) being separated from the facing pole (30, 3) by an amagnetic part (12) of complementary shape to the two poles (3, 30) so that the set of end parts (1), intermediate part(s) (9) and amagnetic material parts (12) constitutes a solid cylinder of revolution having a radius substantially equal to the inside radius of said amagnetic cylinder of revolution casing (13), said cylindrical casing (13) having a number of windows (15) through it equal to the number of poles (3, 30), each window (15) facing said longitudinal face (8) of one of said magnetic material poles (3, 30), each window (15) being occupied by a magnetic material distal tube element (14, 140) the same polarity as the associated pole (3, 30).

8. A magneto-electric rotor according to claim 6 or 7, characterized in that said transverse shoulders (7) are at a non-zero angle to a plane perpendicular to the rotor axis.

9. A magneto-electric rotor according to any one of claims 6 to 8, characterized in that said magnetic (1, 9) or amagnetic (12) material parts comprise a central solid tube element (10, 100, 101) tangential to said symmetrical plane lateral faces (6) and a hollow tube member (11, 110, 111) having an inside radius substantially equal to the radius of said solid tube member (10, 100, 101) and an outside radius substantially equal to the inside radius of said cylindrical casing (13).
